# EUROPEAN PATENT SPECIFICATION

(11) **EP 3 890 329 B1**
(45) Date of publication and mention of the grant of the patent: **11.01.2023**
(21) Application number: 20167111.2
(22) Date of filing: 31.03.2020
(51) Int. Cl.: H04N 21/2343, H04N 21/2365, H04N 21/2387, H04N 21/438, H04N 21/44, H04N 21/6405, H04N 21/6408, H04N 21/845

(54) **VIDEO ENCODING METHOD AND APPARATUS**
VERFAHREN UND VORRICHTUNG ZUR VIDEOKODIERUNG
MÉTHODE ET DISPOSITIF DE CODAGE VIDÉO

(43) Date of publication of application: 06.10.2021
(73) Proprietor: Nokia Solutions and Networks Oy, 02610 Espoo (FI)
(72) Inventor: Dobbelaere, Philippe, 2520 Ranst (BE)
(74) Representative: MERH-IP Matias Erny Reichl Hoffmann Patentanwälte PartG mbB

(56) References cited:
- WO-A1-2015/153234
- US-A1- 2005 190 781

## Description

### TECHNOLOGY

The present disclosure relates to media signal processing, in particular to video encoding with the aim to have a low playout delay at the receiver. More specifically, embodiments of the present disclosure relate to an encoder and an encoding method to reduce live stream playout delay.

### BACKGROUND

Any discussion of the background art throughout the specification should in no way be considered as an admission that such art is widely known or forms part of common general knowledge in the field.

In existing platforms for real time processing of "data streams", which can be data originating from any Internet of Things (IoT) device, any type of sensor may be used for generating data. These data can be e.g. measurement data from any type of sensor (movement, electricity consumption, water level, industrial control, camera, microphones, etc.). These streams can undergo any type of processing before being transmitted to end users. In some cases, live video streams are to be sent to multiple entities over several networks so in order not to consume too much bandwidth, the video streams are to be encoded. In video encoding exists a trade-off between the Group of Pictures (GOP) (also referred to as group of frames) size used during the encoding and the playout latency at the user: low GOP sizes mean that a decoder that starts does not have to wait long for a reference frame, also denoted as an I-frame in some known video encoders, so playout starts soon; high GOP sizes mean coding can be done more efficiently, thereby reducing bitrate. The optimum solution (for optimizing bandwidth and low playout delay) is to provide an individual encoder for each end-user, but this is too expensive from the point of processing resources. In some critical situations such as self-driving vehicles or drone controls, low latency is extremely important e.g. in control loops of drones where the video data is fed to e.g. a neural network for taking decisions. Thus, what is needed is low playout delay and low bitrate at the same time.

WO2015/153234 discloses a synchronization technique for synchronizing streams multiple coded adaptive bit rate output streams across multiple chassis/transcoders by selecting a master encoder among a plurality of encoders for determining segment locations/boundaries for downstream switching between streams from different encoders.

US 2005/190781 discloses a method to facilitate a fast channel change by receiving and decoding a unicast acquisition media stream that corresponds to a soon-to-be-requested target multicast media stream comprising requesting the target multicast media stream of the new channel and splicing from the unicast acquisition stream to the target multicast media stream upon the transmission of the unicast stream is caught up with the multicast stream.

### SUMMARY

The present invention is as defined by the appended independent claims. The remaining embodiments described in the description are to be construed within the limitations of the independent claims.

While some example embodiments will be described herein with particular reference to the above application, it will be appreciated that the present disclosure is not limited to such a field of use, and is applicable in broader contexts.

Notably, it is understood that methods according to the disclosure relate to methods of operating the apparatuses according to the above example embodiments and variations thereof, and that respective statements made with regard to the apparatuses likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

Other and further example embodiments of the present disclosure will become apparent during the course of the following discussion and by reference to the accompanying drawings.

### BRIEF DESCRIPTION OF THE DRAWINGS

Example embodiments of the disclosure will now be described, by way of example only, with reference to the accompanying drawings in which:
Figure 1 schematically illustrates an example of a high level block diagram according to an embodiment of the present disclosure;
Figure 2 schematically illustrates an example of a high level block diagram according to another embodiment of the present disclosure;
Figure 3 schematically illustrates an example of a high level block diagram according to yet another according to an embodiment of the present disclosure; and
Figure 4 schematically illustrates an example of a flow chart of method according to an embodiment of the present disclosure.

### DESCRIPTION OF EXAMPLE EMBODIMENTS

According to a broad aspect, a first encoder and further small, short-lived second encoder for each specific consumer is proposed. The first encoder may operate independent of requests from the remote consumer devices. A remote device, hereafter also denoted as a consumer or a consumer device is to be understood as any entity comprising a video decoder and further processing functions which are needed for real time analysis of the video stream. The first encoder can use a relatively large GOP (Group of Pictures) size (for economizing on bandwidth), and the individual short-lived encoders are only instantiated for a period of time less than a small number N of the GOP size, e.g. 1 or 2 times the GOP size of the second stream. Generally speaking, since the goal is to save on resources, "small" may typically mean that the number N divided by the total amount of GOP frames for that stream is small, as will be appreciated by the skilled person. This fraction is generally the overhead to pay on top of the first encoder cost to guarantee minimal latency. A short-lived encoder immediately emits a reference frame (also called I-frame) and configures its GOP interval so that the next I-frame (or the next Nth I-frame) coincides with the I-frame of the first encoder, upon which time the short-lived encoder may cease to exist. In a further optimization of the bandwidth requirement, a change over from unicast to multicast transport stream at the decoder side is proposed.

Broadly speaking, the present disclosure generally relates to an apparatus comprising a short-lived start-up encoder (hereinafter also referred to as a second encoder) generating a reference frame (e.g., an I-frame) that is aligned with a media stream of a first encoder to eliminate live stream playout delay, the start-up encoder operating in parallel to the first encoder for a short period of time. According to another aspect, I-frame synchronized switching-over from a unicast media stream to a multicast media stream based on an encoder command is proposed.

In embodiments, the present disclosure proposes to address the problem of achieving low latency with a low bandwidth requirement by starting an extra encoder for a consumer device requesting delivery of media content only for a period smaller than the GOP size of the first encoder: the short-lived encoder immediately emits an I-frame (thus, playout at the remote device can start immediately), and configures it's GOP interval so that the next 1-frame coincides with the I-frame of the first encoder. When reaching that I-frame, the short-lived encoder terminates and the stream at the remote device continues to be taken from the single first encoder. In embodiments, the delivery of the streams requires individual unicast transports.

Consequently, a new kind of encoder per individual consumer that only consumes significant CPU resources during the initial GOP frames is proposed. After the start-up process, the proposed system consumes negligible extra resources by relying on the encoding effort of a single first encoder. This approach changes the scalability situation of dedicated encoded streams per consumer when these consumers are requesting the same information with minimized playout latency. The proposed approach allows e.g. drone control video feedback loops with low latency. The encoding effort is essentially constant in number of consumers, and network resources are linear with number of consumers. The fact that this guarantees minimal playout latency and is completely transparent for the consumers is an advantage of this proposal.

In a further embodiment a signal is provided from the encoder side to the decoder so that it synchronizes its operation with the reference frames (e.g., I-frames) from the first encoder. The decoder switches over the transport connection from the dedicated start-up encoder (typically UDP, typically unicast) to an alternative (typically UDP, typically multicast) source provided by the first encoder. This allows for significant reduction in network traffic as this streaming resource can be shared amongst multiple consumers.

This enhanced proposal is particular useful in embodiments where a first encoder is creating a multimedia stream with a particular GOP size, and a new consumer connects somewhere during the GOP but still needs to have a decodable reference (e.g., an I-frame) as soon as possible to start playout. A separate unicast encoded stream (generated by a second encoder) is provided that starts with a reference frame (e.g., an I-frame) and has its GOP configured so that the next (or Nth next) reference frame (e.g., the next or Nth next I-frame) coincides with the next reference frame (e.g., the next I-frame) of the first encoder. As disclosed above, reaching that reference frame, streaming from the first encoder is continued and the second encoder will be stopped. After repeating this process a number of times for different remote devices, multiple unicast streams all linked to the single first encoder exist. At this time, from a network utilization point of view, it becomes beneficial to switch over the remote devices to a single UDP broadcast channel carrying this first encoded stream. According to the state-of-the-art, this can only be done outside the container/encoder/decoder setup by control logic, and it would be difficult to synchronize the switch-over so that no frames get lost. Many state of the art solutions would have to restart the decoder after switching the connections.

According to the present disclosure, it is proposed to signal this switch-over request to another (typically UDP multicast) stream. The receiving side can interpret this signal as a trigger to setup a second transport connection, and since the media data carried in the unicast and the multicast stream are identical and are also sent at the same time (at the sender side, the network might introduce a slight delay difference), it becomes possible for the remote device to switch from transport source and keep the same decoder pipeline running, without losing frames.

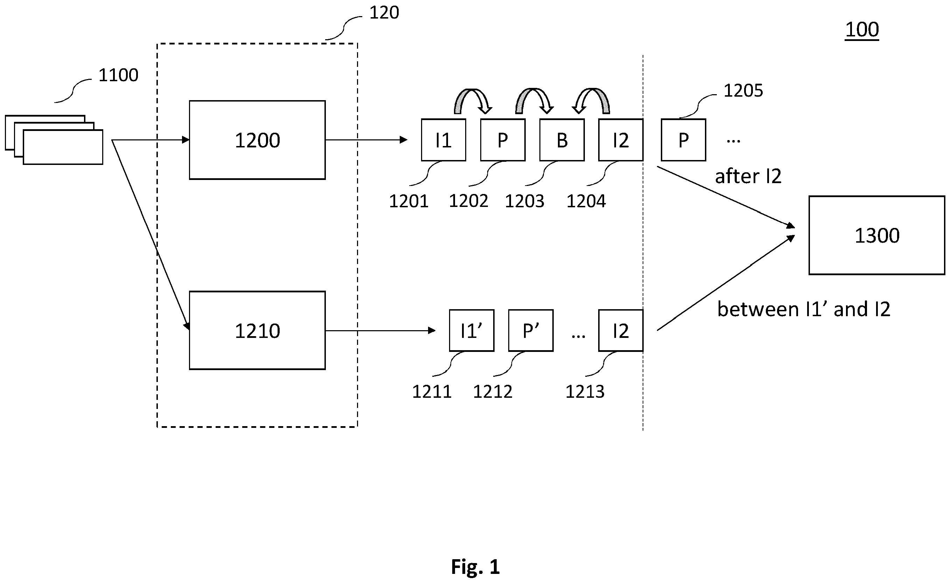

Figure 1 schematically illustrates an example of a high level block diagram 100 according to an embodiment of the present disclosure. For example, the block diagram may represent a video system or platform (such as a live stream system).

In particular, the system 100 comprises a media content source (or, in some cases, referred an input feed) 1100 which generates or provides media content, which can comprise a number of consecutive frames. The system 100 also comprises an apparatus 120 itself in an embodiment comprising a first encoder (e.g., a video encoder) 1200. The first encoder 1200 may be configured to generate a first stream of encoded frames, depicted in Figure 1 by means of the rectangles 1201 to 1204. Particularly, in the example of Figure 1, the first stream may comprise two I-frames, i.e., I1 1201 and 12 1204. Between these two I-frames, in the example of Figure 1, the first stream may also comprise a P frame 1202 and a B frame 1203. As will be clearly understood and appreciated by the skilled person, an I-frame (sometimes also referred to as an intra-coded frame/picture) may refer to a complete image/picture, such as a JPG (Joint Photographic Experts Group) or BMP (bitmap) image file, and is typically least compressible and may not require other video frames to decode. Similarly, there may also be provided a P-frame (or referred to as a predicted frame/picture) referring to a frame that may hold only the changes in the image from the previous frame and thus more compressible than the I-frame; and a B-frame frame (or referred to as a bi-directional predicted frame/picture) referring to a frame that may save even more space by using differences between the current frame and both the preceding and following frames to specify its content. In this sense, it may be considered that I-frames are typically used for random access to the vide stream, or in other words, are typically used as references for the decoding of other pictures. Typically, the number of frames between two I-frames may be referred to as the GOP size (or length). In other words, in the example of Figure 1, the GOP size equals two. However, it should be understood that even though only one P frame 1202 and one B frame 1203 (i.e., GOP size equals two) are shown in the example of Figure 1, other suitable number of P frame(s) and/or B frame(s) may be present, depending on various implementations. Also, any other suitable formats (or types) of frames may as well apply, as will be appreciated by the skilled person.

The system 100 further comprises a remote device 1300, such as a mobile device (smartphone, laptop, gaming device,...), a drone control device, etc., media receiving circuitry in a car, fixed or mobile control appliances etc. In particular, the remote device 1300 may comprise a corresponding and suitable decoder (not shown in Figure 1) that is capable of decoding the video stream encoded by the first encoder 1200. Of course, other entities and/or component (such as suitable software) may as well be needed for example for supporting real time analysis of the video stream, as will be clearly understood and appreciated by the skilled person.

The remote device 1300 may request starting of delivery of the media content for example by (e.g., explicitly) sending a start/initialization command or request to the apparatus 120). Notably, it is likely to happen that the request of starting video delivery may be sent at any time in between two consecutive I-frames, or in other words, non-synchronized with the later I-frames and having an offset to the next previous I-frame. A start request (sometimes denoted as re-start request) may also be sent from the remote device 1300 after the remote device lost synchronization with the media stream, e.g. after the network transmission has been interrupted and is resumed.

Upon receiving of such start request, a second start-up encoder 1210 may be instantiated or started. The second encoder 1210 may support the same coding standards or method as the first encoder 1200, but can as well support another one encoding method or standard. Similar as the first encoder 1200, the second encoder 1210 may also be configured to generate a second stream of frames. Particularly, in the example of Figure 1, the second encoded stream may comprise two I-frames, depicted as 11' 1211 and 12 1213 in Figure 1. Between these two I-frames, in the example of Figure 1, the second stream may also comprise a P' frame 1212. Depending on circumstances, the second stream may or may not comprise a B frame (not shown in Figure 1). Of course, other suitable number and/or formats of the frame may likewise be possible, as will be appreciate by the skilled person.

In particular, the second encoder 1210 may be configured to transmit (or emit) the first I-frame I1' 1211 (e.g., immediately) after reception of the request for starting video delivery sent from the remote device 1300. Since the request for starting video delivery may typically be sent in between two consecutive I-frames of the first encoder (e.g., after the first I-frame I1 1201 of the first stream) as indicated above, timewise speaking, the first I-frame 11' 1211 of the second stream encoded by the second encoder 1210 may also be considered to be transmitted later than the first I-frame I1 1201 of the first stream encoded by the first encoder 1200.

More particularly, the second encoder 1210 may be configured to align the second I-frame 12 1213 of the second stream with the second I-frame 12 1204 of the first stream (represented by the dashed line as shown in Figure 1). Depending on various implementations, the alignment may be achieved by any suitable manner, as will be appreciated by the skilled person. For instance, the second encoder 1210 may be configured to adjust (e.g., increase or decrease) the GOP size of the second stream such that the second I-frame 12 1213 of the second stream may coincide with the second I-frame 12 1204 of the first stream. In the example as shown in Figure 1, this alignment may be achieved for example by omitting a B-frame in the second stream. Accordingly, in the example of Figure 1, the GOP size of the second stream is now 1 (i.e., only one P-frame P' 1212 existing between the first I-frame I1' 1211 and the second I-frame 12 1213). In this case, the GOP size of the second stream (i.e., 1) is smaller than the GOP size of the first stream (i.e., 2). This is particularly useful when only 1 group of frames is generated by the second encoder 1210 and next I-frame after the single group of frames of the second stream is synchronized with an I-frame in the first stream. However, it is also possible that the single group of frames of the second stream has a group size that is larger than the group size of the first stream. For example, the group size of the second stream may be configured to cover the remaining frames in a group of the first stream starting from receipt of the start request (indicating a start point) plus the group size of the first stream. Thus, a single group of frames of the second stream is aligned with the second I-frame in the first stream. In case that a plurality (N>1) of groups of frames of the second stream are generated and the I-frame following the N groups coincides with an I-frame of the first stream, the group size of the second stream may also be larger than the group size of the first stream as long as the group size of the second stream is configured such that the above mentioned I-frames are synchronized (coincide). In general, the group size of the second stream may be determined based on the relationship between start point and a concurrent group of frames of the first stream and the group size of the first stream (or multiples thereof). Since the second encoder will typically cease to operate (or be terminated) after a short time (e.g., till synchronization/alignment of the respective I-frames), the second encoder 1210 may also be referred to as a short-lived encoder.

Notably, in the example as shown in Figure 1, the alignment of the I-frames for the first and second streams is achieved at the second I-frames 12 1204 and 1213. That is to say, in this example, only one group of frames is required for the alignment. However, in some other cases, more time (or, in other words, more frames) may be needed in order to successfully align an I-frame of the second stream with an I-frame of the first stream. In other words, it may be possible that the alignment of the I-frames for the first and second streams may be achieved after a certain number (e.g., more than one) of groups of frames. In this case, the second encoder 1210 may require more complex configuration and/or adjustment of the GOP size such that the alignment can be successfully achieved. Sometimes, the aligned I-frame (or the time instance associated with the aligned I-frame) may be considered as a switching point.

Furthermore, the second encoder 1210 is configured to encode the second stream (e.g., using the same encoding standard as the first encoder 1200). In particular, the encoding may be performed up to the second 1-frame 12 1213 which has been aligned with the second I-frame 1204 of the first stream (i.e., up to the switching point). The encoded second stream (i.e., the frames 1211, 1212 and 1213 in the example of Figure 1) may then be transmitted to the remote device 1300, for example in a unicast (i.e., one-to-one) manner. Once the second stream is completely encoded, i.e., up to the switching point, and transmitted to the remote device 1300, the second encoder 1210 may be terminated (e.g., shut down). That is also why the second encoder 1210 may be referred to as the short-lived encoder, as opposed to the first encoder 1200 which is always present/alive.

When the aligned I-frame 12 1213 of the second stream is encoded, the stream continues to be transmitted (i.e., from the switching point onwards) from the output of the first encoder 1200. That is to say, in view of the example of Figure 1, after the frames 1211, 1212 and 1213 have been transmitted from the second encoder to the remote device 1300, the remote device 1300 continues to receive subsequent frame(s) (i.e., frame 1205 in the present example) from the first encoder 1200. Since the I-frames 12 1204 and 1213 are identical in both streams, the switch-over may be implemented by switching from frame P'1212 to frame 12 1204 and continuing transmission of the first stream from there. Possibly, I-frame 12 1213 need not even be generated by the second encoder 1210. In this way, the second encoder 1210 (i.e., the short-lived encoder) can be safely terminated after the switching point, thereby optimizing (e.g., saving) the processor utilisation of the encoder side while at the same time reducing/lowering the playout delay.

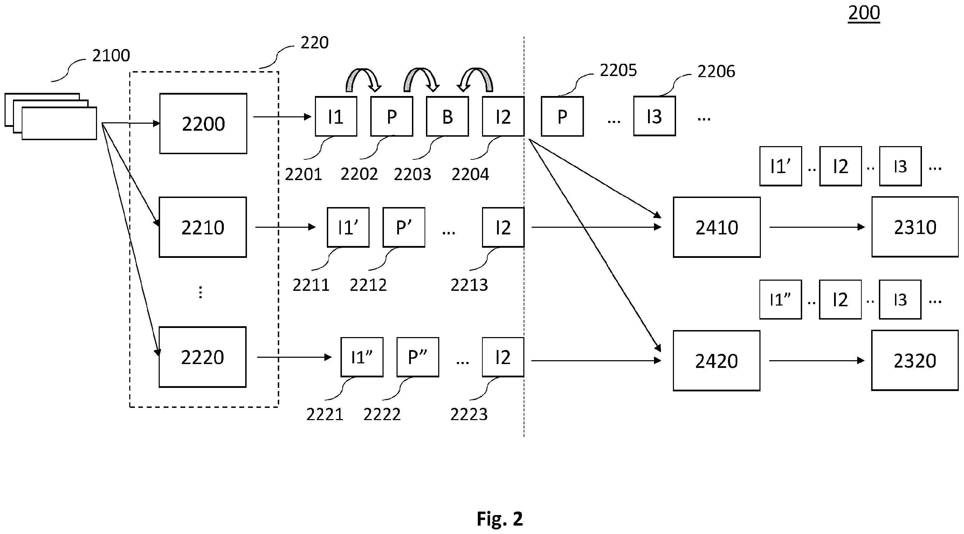

As will be clearly understood and appreciated by the skilled person, in order to successfully combine two sources of frames, e.g., frames 1211, 1212 and 1213 from the second encoder 1210 and frame 1205 from the first encoder 1200, for transmission, a multiplexer (see for example multiplexer 2410 or 2420 in Figure 2, not shown in Figure 1) may be employed. In this way, such switch-over from one stream to another stream (or, in other words, the combination of frames from two streams of different encoders) may be considered to be transparent to the remote device 1300. Thus, the remote device may not need to be specifically modified and redesigned for receiving the media content and may not even notice that streams have been switched and joined.

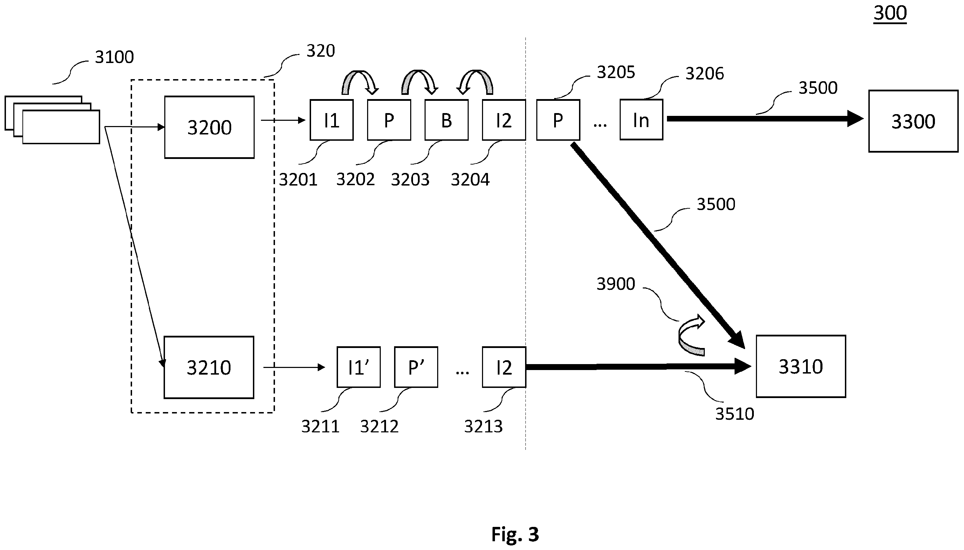

Notably, in the example system 100 of Figure 1, the media content 1100, particularly the encoded first and second streams, may be transmitted or streamed to the remote device 1300 in a unicast (i.e., one-to-one) manner. However, it is also possible that for example the first stream may be transmitted/streamed in a multicast (or broadcast) manner, which will be described in detail below with reference to Figure 3.

Generally speaking, since the second stream that is delivered to the remote device until the switching point starts with a reference (e.g., an I-frame), the remote device does not have to wait until a reference (e.g., an I-frame) is available in the first stream, and can immediately start decoding. Hence, the playback start-up latency for the remote device is reduced. At the switching point, the decoding can be switched over to the first stream. In examples, the switching is performed at the encoder side. For example, at the encoder side, initially the second stream is delivered or transmitted to the remote device. Starting from the switching point, the first stream is delivered or transmitted to the remote device. At the reference frame corresponding to the switching point, the streams can be joined without any visual disturbance so that the remote device receives a continuous stream for decoding and rendering. In this case, the remote device (e.g., a consumer device, a rendering device, or an end-user device) does not notice the switch-over of streams and does not need to be adapted for handling different streams.

Figure 2 schematically illustrates an example of another high level block diagram 200 according to another embodiment of the present disclosure. Notably, identical or like reference numbers as shown in Figure 2 indicate identical or like elements in the system 100 as shown in Figure 1, such that repeated description thereof may be omitted for reasons of conciseness.

In particular, compared to the system 100 of Figure 1, in the system 200 of Figure 2 there are two separate remote devices 2310 and 2320 that need the media content 2100 to be delivered to, respectively.

More particularly, after the first remote device 2310 initiates the start request, the apparatus 220, similar as illustrated above, instantiates a second encoder 2210. The second encoder 2210 may be configured to immediately emit a first I-frame I1' 2211, and then to align a second I-frame 12 2213 to coincide with the second I-frame 12 2204 of the first stream, .e.g., by adjusting the GOP size of the second stream. Subsequently, the second encoder 2210 may be configured to encode the second stream up till the switching point (i.e., till the aligned second I-frame 12 2204 or 2213). Then the streaming will seamlessly switch over to the first stream after the switching point (i.e., frames 2205 and 2206 in the example of Figure 2). For this, a suitable multiplexer 2410 at the encoder (potentially implemented in a server) side may be provided and configured to multiplex (or combine) the frames from the second and first streams together before transmission to the remote device 2130, which generally means that the switch-over may be considered to be transparent to the remote device 2130.

The second remote device 2320 may be handled in analogy to the first remote device 2310. That is, upon reception of the start request from the second remote device 2320 (generally received at a different point in time as the start request from remote device 2310), the apparatus 220 may be configured to instantiate a third encoder 2220 which may acts similarly to the second encoder 2210. A respective multiplexer 2420 may also be provided and configured to multiplex/combine the frames 2221, 2222 and 2223 generated by the third encoder with the frames 2205 and 2206 of the first stream, before being transmitted to the second remote device 2320. Notably, similar as the example in Figure 1, the first and second remote devices 2310 and 2320 may receive the steams in a unicast manner, respectively.

In particular, it should be understood that the first and second remote devices 2310 and 2320 do not necessarily have to request start at the same time, which generally means that the first I-frame I1' generated by the second encoder 2210 and the first I-frame 11" 2221 generated by the third encoder 2220 are not necessarily generated and provided at the same time instance. Correspondingly, the second and third encoder 2210 and 2220 may thus be configured to adjust the respective GOP sizes differently, as will be clearly understood and appreciated by the skilled person, in order to align the respective second I-frames 12 2213 and 2223 with the second I-frame 2204 of the first stream. Although the example of Figure 2 shows that both streams to remote devices 2310, 2320 are aligned at the same I-frames 12 2204, 2213, 2223, the skilled person will appreciate that each remote device may align with the stream of the first encoder 2200 at different I-frames, depending on the time when the respective start request is issued. For example, if the start request from remote device 2320 is received at the encoder side only after the time associated with I-frame 12 2204, the third stream generated by the third encoder 2220 may be synchronized with the first stream from first encoder 2200 e.g. at I-frame 13 2206.

Even though only two remote devices 2310 and 2320 are shown in the example of Figure 2, it should be clearly understood that any plurality of respective remote devices may be present in the system. Particularly, by employing the proposed short-lived encoders (i.e., instantiated upon a new consumer's request and terminated once alignment is achieved), the proposed approach allows for low (or even none) latency video streaming, while at the same time, keeps the encoding effort in the apparatus essentially constant with regard to the number of consumers (or sometimes also referred to as subscribers) and the network resources linear with the number of consumers/subscribers, which makes the proposed approach particularly suitable in certain use cases/scenarios, such as the earlier mentioned drone control video feedback loops.

Figure 3 schematically illustrates an example of another high level block diagram 300 according to yet another according to an embodiment of the present disclosure. Notably, identical or like reference numbers as shown in Figure 3 indicate identical or like elements in the system 100 or 200 as shown in Figure 1 or 2, such that repeated description thereof may be omitted for reasons of conciseness.

In particular, compared to the system 200 of Figure 2, in the system 300 of Figure 3 the media content 3100 is streamed via the first encoder 3200 in a multicast (or in some cases, broadcast) manner through a multicast (or in some cases, broadcast) channel 3500. That is to say, even though only one remote device 3300 is presently shown in the example of Figure 3 configured to receive the streamed video through the multicast channel 3500, it may be possible that other remote device(s) (though not shown in Figure 3) are also receiving the media content through the multicast channel 3500, as will be clearly understood and appreciated by the skilled person.

Now, once the second remote device 3310 wishes to start receiving streaming video, the system 300 may instantiate a second encoder 3210 (i.e., a short-lived encoder). Similar as illustrated above, the second encoder 3210 may be configured to emit the first I-frame I' 3211 and to align the second I-frame 12 3213 with the second I-frame 12 3204 of the first stream. The frames from the first stream are streamed to the second remote device 3310. Similar as the example in Figure 1 or 2, the streaming to the second remote device may be initially performed through a unicast channel 3510.

At the aligned second I-frame 12 (i.e., the switching point), the second remote device 3310 may be configured to be switched over, being schematically denoted by arrow 3900, from the unicast channel 3510 to the multicast/broadcast channel 3500, such that all subsequent frames (e.g., frames 3205 and 3206 in the example of Figure 3) may be received by the second remote device from the multicast/unicast channel 3500, same as the existing first remote device (or referred to as the first subscriber) 3300. The second encoder may then be configured to cease to exist either immediately after the switching point or after a predefined period of time (hence "short-lived"). That is to say, a remote device that has issued the start request may first receive the second stream up to the switching point (via unicast) and then switch-over to the first stream transmitted via multicast. Thus, after the switching point the remote device joins the bandwidth-economic multicast. Before the switching point, the remote device was supplied with a dedicated unicast stream that immediately started with an I-frame after the start request was issued. Hence, the playback start-up latency is reduced because the remote device did not have to wait until an I-frame occurred in the multicast stream. On the other side, after the short time until the switching point, network resources are efficiently used via multicast.

Notably, in some cases, the second remote device 3310 may require some time (e.g., to set up the device internally) in order to be able to perform the switch-over 3900 and to receive the streaming from the multicast channel 3500. Thus, as will be appreciated by the skilled person, in such cases it may be possible that the second remote device may, similar as in the examples of Figure 1 or 2, still temporarily receive the streamed frame(s) (e.g., frame 3205 in the example of Figure 3) from the first encoder 3200 through a unicast channel; and only be switched over 3900 to the multicast channel 3500 at a later I-frame (e.g., the I-frame In 3206 in the example of Figure 3) and continue receive streamed video through the multicast channel 3500 from then on. Notably, the switching-over may be triggered or performed by any suitable means, as will be appreciated by the skilled person. For instance, the switching-over may be sent as a command (or instruction) e.g. from the apparatus 320 to the second remote device 3310. Of course, other means for triggering the switching-over may also be possible.

Any further new remote device (though not explicitly shown in Figure 3) may be handled in an analogous or similar manner. Thereby, particularly by utilizing the multicast/broadcast channel for streaming media content (as opposed to the unicast streaming shown in the examples of Figure 1 or 2), network resources or traffic may be further reduced and thus the overall performance (e.g., efficiency) of the system may be further improved.

An example for a remote device 3300, 3310 for receiving, decoding and possibly rending media content comprises a first receiver to receive a first media stream, a second receiver to receive a second media stream; and a decoder for decoding the first or the second media stream. The media stream may comprise encoded video content. The remote device may further comprise a rendering unit for rending the media content and optionally a media analysis unit for analyzing the media content, e.g. based on artificial intelligence so as to derive further information therefrom.

The first receiver is configured to receive, from an apparatus which can be part of or comprise a media server platform, the first media stream via multicast. The first media stream comprises a periodic sequence of independently decodable I-frames and intermediate frames. An I-frame and consecutive intermediate frames until the next I-frame of the stream form a group of frames having a group size.

The second receiver is configured to receive, from the apparatus which can be part of or comprise a media server platform, a second media stream via unicast. The second media stream has a different periodic sequence of independently decodable I-frames and the second media stream starts with an I-frame. The group size of the second media stream is configured such that a next I-frame following a number of groups of the second media stream coincides at a switching point with an I-frame of the first media stream.

The remote device 3300, 3310 may further comprise a third receiver for receiving, from the apparatus a switch signal comprising an instruction to switch-over decoding of the media content from the second media stream to the first media stream. In embodiments, the first, second and third receivers may be combined into a single integrated receiver for receiving e.g. data packets over the Internet.

The remote device 3300, 3310 may further comprise a processor and memory storing instructions for causing the processor to, in response to the received switch-over instruction, cause the decoder to switch-over, decoding of the media content from the second media stream to the first media stream.

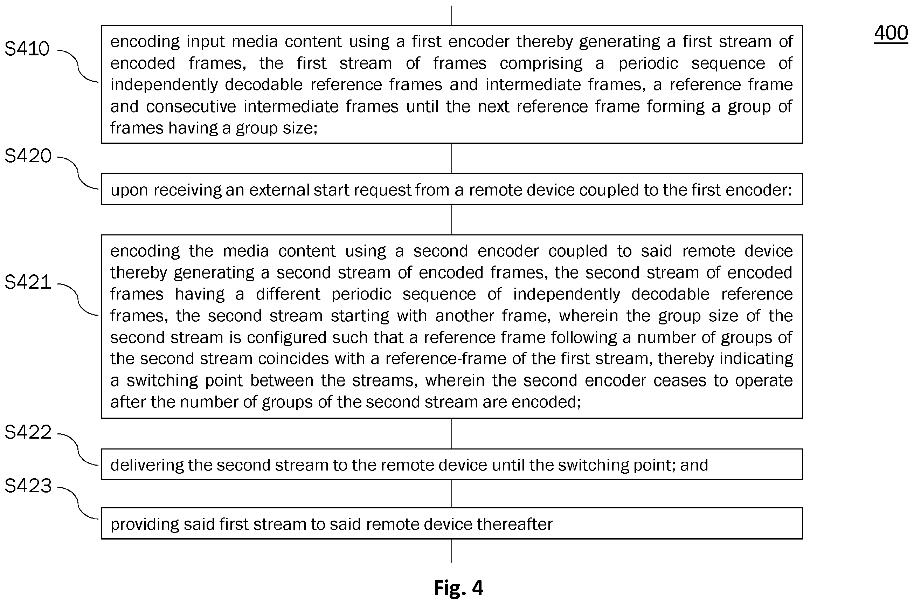

Figure 4 is a flowchart schematically illustrating a method 400 according to an embodiment of the present disclosure. In particular, the method may be suitable for encoding media content for delivery to a remote/consumer device (e.g., a mobile device, a drone control device, etc.).

More particularly, the method 400 starts, at step S410, encoding input media content using a first encoder thereby generating a first stream of encoded frames. In particular, the first stream of frames comprises a periodic sequence of independently decodable reference frames (e.g., I-frames) and intermediate frames (for example P-frames and/or B-frames), a reference frame and consecutive intermediate frames until the next reference frame forming a group of frames having a group size.

The method 400 further comprises, at step S420, upon receiving a start request from a remote device coupled to the apparatus, a sub-step S421, encoding the media content using a second encoder thereby generating a second stream of encoded frames, the second stream of encoded frames having a different periodic sequence of independently decodable reference frames, the second stream starting with another frame, wherein the group size of the second stream is configured such that a reference frame following a number of groups of the second stream coincides with a reference frame of the first stream, thereby indicating a switching point between the streams, wherein the second encoder ceases to operate after the number of groups of the second stream are encoded; a sub-step S422, delivering the second stream to the remote device until the switching point; and a sub-step S423, providing said first stream to said remote device thereafter. As explained above, after the switching point, the first stream many be delivered to the remote device and the switching and stream joining may be performed at the encoder side. Alternatively, the remote device may switch-over at the switching point to the first stream that is distributed via multicast. In this case, a switch signal for instructing the remote device to switch-over rendering of the media content from the second stream to the first stream may be sent to the remote device.

It should be noted that the apparatus (device) features described above correspond to respective method features that may however not be explicitly described, for reasons of conciseness. The disclosure of the present document is considered to extend also to such method features. In particular, the present disclosure is understood to relate to methods of operating the devices described above, and/or to providing and/or arranging respective elements of these devices.

It should also to be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of this disclosure.

It should further be noted that the description and drawings merely illustrate the principles of the present disclosure.

Furthermore, all examples and embodiment outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

## Claims

1. An apparatus comprising means for performing:
encoding input media content, using a first encoder being configured for generating a first stream of encoded frames, the first stream of frames comprising a periodic sequence of independently decodable reference frames and intermediate frames between any two of the reference frames, a reference frame and consecutive intermediate frames until the next reference frame forming a group of frames having a group size; and
upon receiving a start request from a remote device:
encoding the media content, using a second encoder being configured to generate a second stream of frames, the second stream of frames comprising a different periodic sequence of independently decodable reference frames, the second stream starting with a reference frame, wherein the group size of the second stream is configured such that a reference frame following a number of groups of the second stream coincides at a switching point with a reference frame of the first stream, wherein the group size of the second stream is determined based on a relationship between a start point indicated by the received start request and a concurrent group of frames of the first stream and the group size of the first stream;
providing the second stream to said remote device until the switching point; and
providing said first stream thereafter,
wherein the means are further configured to stop operation of the second encoder after the number of groups of the second stream are encoded.

2. The apparatus of claim 1, wherein the means are further configured to, upon receiving said start request, instantiate the second encoder by determining the group size of the second stream such that a next reference frame following a number N of groups of the second stream coincides with a reference frame of the first stream, the number N being a small number less than 10.

3. The apparatus of claim 1 or 2, wherein the means are further configured to determine the group size of the second stream as being smaller than the group size of the first stream.

4. The apparatus of any previous claim, wherein the means are further configured to operate a plurality of respective second encoders upon receiving respective start requests from different respective remote devices, each respective second encoder associated with a respective remote device.

5. The apparatus of any previous claim, wherein the means are further configured to determine a second reference frame of the second stream such that it coincides with a reference frame of the first stream and the number N of groups is 1.

6. The apparatus of any previous claim, wherein the means are further configured to deliver the first stream is delivered via a respective unicast channel to a respective remote device associated to the respective request and to deliver said second stream via another respective unicast channel to the respective remote device.

7. The apparatus of any of claims 1 to 5, wherein the means are further configured to transmit the first stream via a multicast channel to a respective remote device associated to the respective request and to transmit said second stream via a respective unicast channel to said respective remote device.

8. The apparatus of claim 7, wherein the means are further configured to transmit said first stream via said multicast channel as from the onset of the first encoding.

9. The apparatus of claim 8, wherein the means are further configured to generate and transmit a switch signal to the remote device for instructing the remote device to switch-over rendering of the media content from the second stream to the first stream, the switch signal comprising an indication of the switching point and the switching being at a reference frame of the first stream.

10. The apparatus of any previous claim, wherein the means comprises:
at least one processor; and
at least one memory including computer program code, the at least one memory and computer program code configured to, with the at least one processor, cause the performance of the apparatus.

11. A method comprising:
encoding input media content using a first encoder thereby generating a first stream of encoded frames, the first stream of frames comprising a periodic sequence of independently decodable reference frames and intermediate frames between any two of the reference frames, a reference frame and consecutive intermediate frames until the next reference frame forming a group of frames having a group size; and
upon receiving a start request from a remote device:
encoding the media content using a second encoder thereby generating a second stream of encoded frames, the second stream of encoded frames comprising a different periodic sequence of independently decodable reference frames, the second stream starting with a reference frame, wherein the group size of the second stream is configured such that a reference frame following a number of groups of the second stream coincides with a reference frame of the first stream, thereby indicating a switching point between the streams, wherein the group size of the second stream is determined based on a relationship between a start point indicated by the received start request and a concurrent group of frames of the first stream and the group size of the first stream;
delivering the second stream to the remote device until the switching point; and
providing said first stream to said remote device thereafter,
wherein the second encoder ceases to operate after the number of groups of the second stream are encoded.

12. The method of claim 11, further comprising a step of instantiating the second encoder, the instantiation comprising determining the group size of the second stream such that a next reference frame following a number N of groups of the second stream coincides with a reference frame of the first stream, the number N being a small number less than 10.

13. The method of claim 11 or 12, wherein the group size of the second stream is smaller than the group size of the first stream.

14. The method of any of claims 11 to 13, wherein a plurality of respective second encoders are operated upon respective requests from different respective remote devices, each respective second encoder associated with a respective remote device.

15. The method of any of claims 11 to 14, wherein the first stream is delivered via a respective unicast channel to a respective remote device associated to the respective request and said second stream is delivered via another respective unicast channel to the respective remote device; or
wherein the first stream is transmitted via a multicast channel to a respective remote device associated to the respective request and said second stream is transmitted via a respective unicast channel to said respective remote device.

## Patentansprüche

1. Einrichtung, die Mittel zum Durchführen von Folgendem umfasst:
Codieren eines Eingabemedieninhalts unter Verwendung eines ersten Codierers, der dazu ausgelegt ist, einen ersten Stream von codierten Frames zu erzeugen, wobei der erste Stream von Frames eine periodische Sequenz von unabhängig decodierbaren Referenzframes und Zwischenframes zwischen jeweils zwei der Referenzframes umfasst, wobei ein Referenzframe und aufeinanderfolgende Zwischenframes bis zum nächsten Referenzframe eine Gruppe von Frames bilden, die eine Gruppengröße aufweisen; und
nach Empfangen einer Startanforderung von einer entfernten Vorrichtung:
Codieren des Medieninhalts unter Verwendung eines zweiten Codierers, der dazu ausgelegt ist, einen zweiten Stream von Frames zu erzeugen, wobei der zweite Stream von Frames eine andere periodische Sequenz von unabhängig decodierbaren Referenzframes umfasst, wobei der zweite Stream mit einem Referenzframe beginnt, wobei die Gruppengröße des zweiten Streams derart ausgelegt ist, dass ein Referenzframe, der einer Anzahl von Gruppen des zweiten Streams folgt, an einem Umschaltpunkt mit einem Referenzframe des ersten Streams zusammenfällt, wobei die Gruppengröße des zweiten Streams auf Basis einer Beziehung zwischen einem Startpunkt, der von der empfangenen Startanforderung angezeigt wird, und einer gleichzeitigen Gruppe von Frames des ersten Streams und der Gruppengröße des ersten Streams bestimmt wird;
Bereitstellen des zweiten Streams für die entfernte Vorrichtung bis zum Umschaltpunkt; und
danach Bereitstellen des ersten Streams,
wobei die Mittel ferner dazu ausgelegt sind, den Betrieb des zweiten Codierers zu beenden, wenn die Anzahl von Gruppen des zweiten Streams codiert sind.

2. Einrichtung nach Anspruch 1, wobei die Mittel nach Empfangen der Startanforderung ferner dazu ausgelegt sind, durch Bestimmen der Gruppengröße des zweiten Streams den zweiten Codierer zu instanziieren, derart, dass ein nächster Referenzframe, der einer Anzahl N von Gruppen des zweiten Streams folgt, mit einem Referenzframe des ersten Streams zusammenfällt, wobei die Anzahl N eine kleine Anzahl kleiner als 10 ist.

3. Einrichtung nach Anspruch 1 oder 2, wobei die Mittel ferner dazu ausgelegt sind zu bestimmen, dass die Gruppengröße des zweiten Streams kleiner ist als die Gruppengröße des ersten Streams.

4. Einrichtung nach einem der vorhergehenden Ansprüche, wobei die Mittel ferner dazu ausgelegt sind, nach Empfangen von jeweiligen Startanforderungen von verschiedenen jeweiligen entfernten Vorrichtungen eine Vielzahl von jeweiligen zweiten Codierern zu betreiben, wobei jeder jeweilige zweite Codierer mit einer jeweiligen entfernten Vorrichtung verknüpft ist.

5. Einrichtung nach einem der vorhergehenden Ansprüche, wobei die Mittel ferner dazu ausgelegt sind, einen zweiten Referenzframe des zweiten Streams zu bestimmen, derart, dass er mit einem Referenzframe des ersten Streams zusammenfällt, und die Anzahl N von Gruppen 1 ist.

6. Einrichtung nach einem der vorhergehenden Ansprüche, wobei die Mittel ferner dazu ausgelegt sind, den ersten Stream via einen jeweiligen Unicastkanal an eine jeweilige entfernte Vorrichtung zu liefern, die mit der jeweiligen Anforderung verknüpft ist, und den zweiten Stream via einen anderen jeweiligen Unicastkanal an die jeweilige entfernte Vorrichtung zu liefern.

7. Einrichtung nach einem der Ansprüche 1 bis 5, wobei die Mittel ferner dazu ausgelegt sind, den ersten Stream via einen Multicastkanal zu einer jeweiligen entfernten Vorrichtung zu übertragen, die mit der jeweiligen Anforderung verknüpft ist, und den zweiten Stream via einen jeweiligen Unicastkanal zur jeweiligen entfernten Vorrichtung zu übertragen.

8. Einrichtung nach Anspruch 7, wobei die Mittel ferner dazu ausgelegt sind, den ersten Stream ab dem Einsatz der ersten Codierung via den Multicastkanal zu übertragen.

9. Einrichtung nach Anspruch 8, wobei die Mittel ferner dazu ausgelegt sind, ein Umschaltsignal zu erzeugen und zur entfernten Vorrichtung zu übertragen, um die entfernte Vorrichtung anzuweisen, das Rendern des Medieninhalts vom zweiten Stream auf den ersten Stream umzuschalten, wobei das Umschaltsignal eine Anzeige des Umschaltpunktes umfasst und wobei das Umschalten an einem Referenzframe des ersten Streams erfolgt.

10. Einrichtung nach einem der vorhergehenden Ansprüche, wobei die Mittel Folgendes umfassen:
mindestens einen Prozessor; und
mindestens einen Speicher, der Computerprogrammcode beinhaltet, wobei der mindestens eine Speicher und der Computerprogrammcode dazu ausgelegt sind, mit dem mindestens einen Prozessor die Durchführung durch die Einrichtung zu bewirken.

11. Verfahren, das Folgendes umfasst:
Codieren eines Eingabemedieninhalts unter Verwendung eines ersten Codierers, dadurch Erzeugen eines ersten Streams von codierten Frames, wobei der erste Stream von Frames eine periodische Sequenz von unabhängig decodierbaren Referenzframes und Zwischenframes zwischen jeweils zwei der Referenzframes umfasst, wobei ein Referenzframe und aufeinanderfolgende Zwischenframes bis zum nächsten Referenzframe eine Gruppe von Frames bilden, die eine Gruppengröße aufweisen; und
nach Empfangen einer Startanforderung von einer entfernten Vorrichtung:
Codieren des Medieninhalts unter Verwendung eines zweiten Codierers, dadurch Erzeugen eines zweiten Streams von codierten Frames, wobei der zweite Stream von codierten Frames eine andere periodische Sequenz von unabhängig decodierbaren Referenzframes umfasst, wobei der zweite Stream mit einem Referenzframe beginnt, wobei die Gruppengröße des zweiten Streams derart ausgelegt ist, dass ein Referenzframe, der einer Anzahl von Gruppen des zweiten Streams folgt, mit einem Referenzframe des ersten Streams zusammenfällt, dadurch Anzeigen eines Umschaltpunktes zwischen den Streams, wobei die Gruppengröße des zweiten Streams auf Basis einer Beziehung zwischen einem Startpunkt, der von der empfangenen Startanforderung angezeigt wird, und einer gleichzeitigen Gruppe von Frames des ersten Streams und der Gruppengröße des ersten Streams bestimmt wird;
Liefern des zweiten Streams an die entfernte Vorrichtung bis zum Umschaltpunkt; und
danach Bereitstellen des ersten Streams für die entfernte Vorrichtung,
wobei der zweite Codierer nicht mehr betrieben wird, wenn die Anzahl von Gruppen des zweiten Streams codiert sind.

12. Verfahren nach Anspruch 11, das ferner einen Schritt des Instanziierens des zweiten Codierers umfasst, wobei das Instanziieren das Bestimmen der Gruppengröße des zweiten Streams derart, dass ein nächster Referenzframe, der einer Anzahl N von Gruppen des zweiten Streams folgt, mit einem Referenzframe des ersten Streams zusammenfällt, umfasst, wobei die Anzahl N eine kleine Anzahl kleiner als 10 ist.

13. Verfahren nach Anspruch 11 oder 12, wobei die Gruppengröße des zweiten Streams kleiner ist als die Gruppengröße des ersten Streams.

14. Verfahren nach einem der Ansprüche 11 bis 13, wobei eine Vielzahl von jeweiligen zweiten Codierern nach jeweiligen Anforderungen von verschiedenen jeweiligen entfernten Vorrichtungen betrieben werden, wobei jeder jeweilige zweite Codierer mit einer jeweiligen entfernten Vorrichtung verknüpft ist.

15. Verfahren nach einem der Ansprüche 11 bis 14, wobei der erste Stream via einen jeweiligen Unicastkanal an eine jeweilige entfernte Vorrichtung geliefert wird, die mit der jeweiligen Anforderung verknüpft ist, und der zweite Stream via einen anderen jeweiligen Unicastkanal an die jeweilige entfernte Vorrichtung geliefert wird; oder
wobei der erste Stream via einen Multicastkanal zu einer jeweiligen entfernten Vorrichtung übertragen wird, die mit der jeweiligen Anforderung verknüpft ist, und der zweite Stream via einen jeweiligen Unicastkanal zur jeweiligen entfernten Vorrichtung übertragen wird.

## Revendications

1. Appareil comprenant des moyens pour réaliser :
le codage d'un contenu multimédia d'entrée en utilisant un premier codeur qui est configuré pour générer un premier flux de trames codées, le premier flux de trames comprenant une séquence périodique de trames de référence décodables indépendamment et des trames intermédiaires entre deux quelconques des trames de référence, une trame de référence et les trames intermédiaires consécutives jusqu'à la trame de référence suivante formant un groupe de trames ayant une taille de groupe ; et
à la réception d'une demande de démarrage provenant d'un dispositif distant :
le codage du contenu multimédia en utilisant un deuxième codeur qui est configuré pour générer un deuxième flux de trames, le deuxième flux de trames comprenant une séquence périodique différente de trames de référence décodables indépendamment, le deuxième flux commençant par une trame de référence, dans lequel la taille de groupe du deuxième flux est configurée de sorte qu'une trame de référence suivant un certain nombre de groupes du deuxième flux coïncide à un point de commutation avec une trame de référence du premier flux, dans lequel la taille de groupe du deuxième flux est déterminée sur la base d'une relation entre un point de début indiqué par la demande de démarrage reçue et un groupe simultané de trames du premier flux, et de la taille de groupe du premier flux ;
la fourniture du deuxième flux audit dispositif distant jusqu'au point de commutation ; et
la fourniture dudit premier flux par la suite,
dans lequel les moyens sont en outre configurés pour arrêter le fonctionnement du deuxième codeur après le codage dudit nombre de groupes du deuxième flux.

2. Appareil selon la revendication 1, dans lequel les moyens sont en outre configurés pour, à la réception de ladite demande de démarrage, instancier le deuxième codeur en déterminant la taille de groupe du deuxième flux de sorte qu'une trame de référence suivante, suivant un nombre N de groupes du deuxième flux, coïncide avec une trame de référence du premier flux, le nombre N étant un petit nombre inférieur à 10.

3. Appareil selon la revendication 1 ou 2, dans lequel les moyens sont en outre configurés pour déterminer la taille de groupe du deuxième flux comme étant inférieure à la taille de groupe du premier flux.

4. Appareil selon l'une quelconque des revendications précédentes, dans lequel les moyens sont en outre configurés pour faire fonctionner une pluralité de deuxièmes codeurs respectifs à la réception de demandes respectives de démarrage provenant de différents dispositifs distants respectifs, chaque deuxième codeur respectif étant associé à un dispositif distant respectif.

5. Appareil selon l'une quelconque des revendications précédentes, dans lequel les moyens sont en outre configurés pour déterminer une deuxième trame de référence du deuxième flux de sorte qu'elle coïncide avec une trame de référence du premier flux, et le nombre N de groupes est égal à 1.

6. Appareil selon l'une quelconque des revendications précédentes, dans lequel les moyens sont en outre configurés pour délivrer le premier flux via un canal unicast respectif à un dispositif distant respectif associé à la demande respective, et pour délivrer ledit deuxième flux via un autre canal unicast respectif au dispositif distant respectif.

7. Appareil selon l'une quelconque des revendications précédentes 1 à 5, dans lequel les moyens sont en outre configurés pour transmettre le premier flux via un canal de multicast à un dispositif distant respectif associé à la demande respective, et pour transmettre ledit deuxième flux via un canal unicast respectif audit dispositif distant respectif.

8. Appareil selon la revendication 7, dans lequel les moyens sont en outre configurés pour transmettre ledit premier flux via ledit canal de multicast dès le début du premier codage.

9. Appareil selon la revendication 8, dans lequel les moyens sont en outre configurés pour générer et transmettre un signal de commutation au dispositif distant pour donner l'instruction au dispositif distant de commuter le rendu du contenu multimédia du deuxième flux au premier flux, le signal de commutation comprenant une indication du point de commutation, et la commutation se faisant à une trame de référence du premier flux.

10. Appareil selon l'une quelconque des revendications précédentes, dans lequel le moyen comprend :
au moins un processeur ; et
au moins une mémoire comportant un code de programme informatique, l'au moins une mémoire et le code de programme informatique étant configurés pour, avec l'au moins un processeur, provoquer la performance de l'appareil.

11. Procédé comprenant :
le codage d'un contenu multimédia d'entrée en utilisant un premier codeur, générant ainsi un premier flux de trames codées, le premier flux de trames comprenant une séquence périodique de trames de référence décodables indépendamment et des trames intermédiaires entre deux quelconques des trames de référence, une trame de référence et les trames intermédiaires consécutives jusqu'à la trame de référence suivante formant un groupe de trames ayant une taille de groupe ; et
à la réception d'une demande de démarrage provenant d'un dispositif distant :
le codage du contenu multimédia en utilisant un deuxième codeur, générant ainsi un deuxième flux de trames codées, le deuxième flux de trames codées comprenant une séquence périodique différente de trames de référence décodables indépendamment, le deuxième flux commençant par une trame de référence, dans lequel la taille de groupe du deuxième flux est configurée de sorte qu'une trame de référence suivant un certain nombre de groupes du deuxième flux coïncide avec une trame de référence du premier flux, indiquant ainsi un point de commutation entre les flux, dans lequel la taille de groupe du deuxième flux est déterminée sur la base d'une relation entre un point de début indiqué par la demande de démarrage reçue et un groupe simultané de trames du premier flux, et de la taille de groupe du premier flux ;
la distribution du deuxième flux au dispositif distant jusqu'au point de commutation ; et
la fourniture dudit premier flux audit dispositif distant par la suite,
dans lequel le deuxième codeur cesse de fonctionner après le codage dudit certain nombre de groupes du deuxième flux.

12. Procédé selon la revendication 11, comprenant en outre une étapes consistant à instancier le deuxième codeur, l'instanciation comprenant la détermination de la taille de groupe du deuxième flux de sorte qu'une trame de référence suivante, suivant un nombre N de groupes du deuxième flux, coïncide avec une trame de référence du premier flux, le nombre N étant un petit nombre inférieur à 10.

13. Procédé selon la revendication 11 ou 12, dans lequel la taille de groupe du deuxième flux est inférieure à la taille de groupe du premier flux.

14. Procédé selon l'une quelconque des revendications précédentes 11 à 13, dans lequel une pluralité de deuxièmes codeurs respectifs sont actionnés à des demandes respectives provenant de différents dispositifs distants respectifs, chaque deuxième codeur respectif étant associé à un dispositif distant respectif.

15. Procédé selon l'une quelconque des revendications précédentes 11 à 14, dans lequel le premier flux est délivré via un canal unicast respectif à un dispositif distant respectif associé à la demande respective, et ledit deuxième flux est délivré via un autre canal unicast respectif au dispositif distant respectif ; ou
dans lequel le premier flux est transmis via un canal de multicast à un dispositif distant respectif associé à la demande respective, et ledit deuxième flux est transmis via un canal unicast respectif audit dispositif distant respectif.
